# EUROPEAN PATENT SPECIFICATION

(11) **EP 0 983 312 B1**
(45) Date of publication and mention of the grant of the patent: **25.09.2002**
(21) Application number: 98923579.1
(22) Date of filing: 20.05.1998
(51) Int. Cl.: C08J 9/00, C08J 9/32

(54) **EPOXY-CONTAINING FOAMING COMPOSITIONS AND USE THEREOF**
EPOXYENTHALTENDE SCHAUMZUSAMMENSETZUNGEN UND DESSEN VERWENDUNG
COMPOSITIONS EN MOUSSE CONTENANT UN EPOXY ET LEURS UTILISATIONS

(30) Priority: 21.05.1997 US 47273 P; 24.03.1998 US 79205 P
(43) Date of publication of application: 08.03.2000
(73) Proprietor: Denovus L.L.C., Excelsior Springs, MO 64024 (US); Pachl, Jeffrey T., Holt, MO 64048 (US); Taylor, Donald, Liberty, MO 64069 (US)
(72) Inventor: PACHL, Jeffrey, T., Holt, MO 64048 (US); TAYLOR, Donald, Liberty, MO 64069 (US)
(74) Representative: Brookes Batchellor
(86) International application number: US9810331
(87) International publication number: WO98052997

(56) References cited:
- EP-A- 0 012 593
- GB-A- 1 485 995
- US-A- 5 183 583
- DATABASE WPI Section Ch, Week 7621 Derwent Publications Ltd., London, GB; Class A14, AN 76-38795X XP002074707 & JP 51 041 028 A (FUJIKURA KASEI KK)
- DATABASE WPI Section Ch, Week 9137 Derwent Publications Ltd., London, GB; Class A21, AN 91-270311 XP002074708 & JP 03 177 439 A (MITSUI TOATSU CHEM INC)

## Description

The instant invention relates to compositions, precursors thereof and methods of using the precursors to make foam and foam containing articles.

Foams are employed in a wide range of commercial applications including automotive, construction, among other applications requiring thermal or sound insulation. In the automotive industry, foams are typically formed in situ, and can be used to fill cavities such as pillars and rocker panels, and to dampen sound transmission. In situ foam formation has typically been accomplished by using a polyurethane foam based on isocyanante chemistry. Certain polyurethane foam components and by-products thereof are believed to have an undesirable environmental impact. Consequently, there is a need in this art for a low-temperature foam which is cost-effective and substantially free of undesirable materials.

EP-0 012 593 describes a foamed phenolic material obtained by reacting a mixture comprising a phenolic resin and an epoxy resin. The reaction is effected in the presence of a foaming or blowing agent, a catalyst, a reinforcing material, at least one filler material and optionally a surfactant. GB 1 485 995 describes a foamed material formed by reacting one or more furan resins with other resins, such as epoxy resins, in the presence of phosphoric acid or a derivative thereof.

The instant invention solves problems associated with conventional foam formulations by providing foam compositions and precursors thereto as defined in the claims which are not based upon polyurethane or isocyanate chemistry. The inventive compositions and precursors thereof reduce. If not eliminate, the presence of conventional undesirable compounds and by-products thereof while providing the benefits associated with conventional foams, e.g. sound dampening. The inventive compositions can be polyurethane and/or isocyanate free. By "free" it is meant that the inventive compositions before or after foaming contain less than about 10 wt.% polyurethane and/or isocyanurates, isocyanate, and in most case 0 wt.%. While the presence of such compounds does not adversely affect the reaction described below in greater detail, these materials can be obviated by employing the invention formulations. The instant invention, therefore, provides a foam which can be used with or instead of urethane/isocyanate based foams and foaming systems.

One aspect of the invention relates to a method as defined in the claims of contacting and in turn reacting the precursors of the composition at ambient conditions to produce a foam. This reaction produces a relatively large exotherm. The exotherm or heat released by the contact reaction was found to be sufficient to drive an endothermic blowing agent, thus creating a foam virtually instantaneously. Further, the exothermic reaction can cause a blowing agent entrapped within, for example, thermoplastic powders to expand thereby forming a foam.

Another aspect of the invention relates to a method of containing the foam during expansion by expanding the foam within a containment or control means. The control means confines the expanding foam and determines the direction of expansion. While any suitable control means can be employed, a polymeric bag or sack is desirable. The polymeric bag can be fabricated from a virtually unlimited array of materials and configured into any desirable shape.

The inventive foam can be employed in a wide array of end-uses. Examples of such uses include thermal insulation such as refrigeration, spray or rigid insulation for walls, marine foams, hot-water heaters, automotive sound dampeners, among others.

The subject matter of the instant invention is related to PCT International Publication No. WO 98/53008, filed on even date herewith in the name of Jeffrey Pachl et al., and entitled "Curable Sealant Composition".

Figure 1 is a graphical representation of the foam reaction rate and temperature as a function of percent acid.

Figures 2A and 2B are a schematic drawings of assemblies that can be employed for dispensing the inventive foam within a defined cavity or area.

The inventive foam composition is obtained from foam precursors as defined in the claims. The precursor comprises at least one epoxy functional compound, at least one carrier, e.g., a polyol, at least one hydrogen donor or an acid, e.g., phosphoric acid or a catalyist such as a photoinitiator, optionally at least one modifying material such as a thermoplastic, and at least one expansion or blowing agent, among other components. The foam precursor(s) can comprise a two component system (a so-called A and B side) that are contacted to produce a foam, or a single phase system that is activated in response to a source of energy, e.g., heat, UV light, among other energy sources. When a two component system is employed the epoxy and acid source are separated. An exothermic reaction between the epoxy and hydrogen donor or acid activates the blowing agent thereby producing a foam.

The epoxy functional compound comprises 30 to 50 wt% of the precursor. Examples of suitable epoxy functional compounds comprise at least one member selected from the group consisting of bisphenol A epoxy, epoxy modified elastomers, epoxy modified polybutene, epoxy modified polybutadiene, epoxy modified ethylene propylene diene rubber (EPDM), cycloaliphatic epoxy, mixtures thereof, among others. When a two component system is employed, the epoxy functional compound is located on the A-side, or otherwise prevented from reacting with the acid, e.g., the epoxy is separated from an acid source.

The density, moisture and temperature resistance among other physical properties of the final foam product can be modified or tailored by adding a thermoplastic, theromset, plastic or resinous material to the epoxy functional compound. All materials including carriers, fillers, viscosity control agents, etc. that become incorporated within the final foam composition function as a modifying material. While any suitable modifying material can be employed, examples of such materials comprise at least one member selected from the group consisting of ethylene vinyl acetate copolymer, propylene/ethylene rubber, phenoxy resin, phenolic resin, powdered wax, powdered epoxy functional compound, among others. 1 to 10 wt.% of modifying material can be added to the epoxy, e.g., about 2 wt.% of the precursor. The modifying material will normally comprise a powder having a particle size less than about 20 microns and a melting point from 200 to 270 C. The modifying material will become fluid and normally melt when exposed to the exothermic reaction temperature. When a two component precursor system is employed, these materials are normally combined with the epoxy functional compound or A side.

The carrier usually comprises 20 to 40 wt.% of the precursor , e.g., usually about 30 wt.%. The carrier serves to deliver an acid, expanding agent, catalyst, mixtures thereof, among others for contact with the epoxy functional compound. A carrier also function as a modifying material in that the carrier becomes incorporated within the final foam and modifies the physical properties of the foam. Examples of suitable carriers comprise at least one member selected from the group of polyester polyols, polyvinyl alcohol, water, among other carriers that are preferably miscible with the epoxy functional compound and mixtures thereof. When a two component precursor system is employed, these carrier materials are added to the acid side or "B" side component of the foam precursors.

The hydrogen donor, e.g., acid or photo initiator, provides a source of H⁺ that particpate in an exothermic reaction with an epoxy functional compound. The hydrogen donor or acid usually comprises 20 to 30 wt.% of the precursor, e.g., 5% to 20% of precursor part B. Examples of suitable donors can comprise Lewis acids such as at least one member selected from the group consisting of sulfonic acids, phosphoric acid, citric acid, carboxylic acid, tannic and oxalic acids, mixtures thereof, among others. Particularly desirable results have been achieved by employing sulfonic and/or phosphoric acids. When a two component precursor system is employed, the acid corresponds to the B side of the foam precursors. If desired, the acid can comprises an acid functionally equivalent to the hydrogen donor released by a UV photoinitiator, e.g., replace a portion of the photoinitiator with its corresponding acid. That is, a photoinitiator is a precursor to a hydrogen donor in that the photoinitiator provides H⁺ when activated.

In one aspect of the invention, the hydrogen donor comprises a photo-initiator that becomes active when exposed to a source of energy. While any suitable hydrogen donor/photoinitiator can be employed, an example of a suitable photo-initiator comprises a UV catalyst such as UVI 6974 (Union Carbide) that is described in greater detail in the aforementioned copending and commonly assigned PCT International Publication No. WO 98/53008. When such a hydrogen donor is employed, the foam precursors can be utilized in a single phase system. For example, such a single phase system can be dispensed, exposed to a UV light source that causes the UV catalyst to generate an acid thereby permitting an epoxy functional based reaction to occur. The heat released by the exothermic epoxy reaction in turn activates an expansion or blowing agent, e.g., a hydrocarbon encapsulated within a thermoplastic, thereby producing a foam. While any suitable single or two phase system can be employed, normally a single phase system produces a foam that is thin relative to a two phase system.

In another aspect of the invention, the modifying material comprises a thermoplastic. The thermoplastic modifying material of the foam precursor can comprise at least one member selected from the group consisting of polyacrylonitrile, polyethylene, phenolic resin, wax, EVA, polypropylene, GMA, acid modified polyethylene, polybutadiene, modified polyethylene blends (such as Bynel® supplied by DuPont Company), SIS block copolymers (such Katron® supplied by Shell Chemical), among other thermoplastic materials that can be dispersed in a foam precursor and have a melting point less than about the aforementioned exothermic reaction and mixtures thereof. Normally, the thermoplastic modifying material of the precursor will comprise 10% to 15 wt.% of the precursor. The thermoplastic can possess any desirable configuration or particle size. In some cases, the thermoplastic can form a film or skin upon an exterior surface of the foam thereby improving the resistance of the foam to fluids, e.g., water, gasoline, among other fluids.

In one particularly useful aspect of the invention, a blowing agent is combined with or encapsulated within a thermoplastic particle or powder, e.g., a hydrocarbon encapsulated within a polyacrylonitrile shell known as Expancel® that is supplied by Nobel Industries. When a two component precursor system is employed, the shells are normally combined on the B side along with the carrier. These shells can, however, be combined with the A side or in a single phase system so long as the composition of the shells is not substantially affected by the epoxy, e.g, the polyacrylonitrile shells may be soluble within the epoxy. For example, the shells can be fabricated from nylon, EVA, among other materials not soluble in the epoxy functional compound, and mixtures thereof could be present in the epoxy component of a two phase precursor system. Polyethylene and polypropylene can function as a shell for encapsulating a blowing agent as well as a modifying material. That is, the encapsulated blowing agent becomes incorporated within the foam and the characteristics of the shell encapsulating the blowing agent as well as the blowing agent can modify the properties of the final foam. When the A and B sides are contacted (or in the case of a single phase system exposed to an energy source), the epoxy functional compound reacts with the hydrogen donor or acid thereby releasing heat and causing the expansion agent within the shells to foam. The foam can be characterized by a composite wherein the epoxy functional reaction product (including of the aforementioned modifying materials) forms a matrix that embeds the expanded shells. Depending upon the physical characteristics desired in the foam, the shells can be open or closed cells.

The aforementioned blowing agent can comprise at least one member selected from the group consisting of hydrazide, diphenyloxide-4,4-disulphohydrazide, carbonamide, azocarbonamide, hexamethylene diamine carbamate, sodium bicarbonate, carbon dioxide, hydrofluorocarbons such as difluoroethane, tetrafluoroethane, among others; hydrocarbons such as butane, propane; mixtures thereof, among others. Water can function as a carrier as well as a blowing agent. That is, water can be employed to carry or deliver the hydrogen donor and if the exothermic reaction releases enough heat, water can become a vapor that expands thereby producing a foam. Normally, the expansion or blowing agent comprises 5 to 40 wt.% of the foam precursors.

The foam characteristic can also be tailored by adding one or more filler materials. Conventionally used filler materials comprise at least one of talc, mica, magnesium silicate, mixtures thereof, among others. If desired calcium carbonate can be added to the foam precursor for increasing the hardness and density of the resultant foam. When included the filler comprises 5 to 35 wt.% of the foam precursors.

An example of a combined A and B side precursor composition is set forth in the following Table.

**TABLE**

| Chemical Name | Trade Name | Supplier | Wt. % | Equivalent |
|---|---|---|---|---|
| Cycloaliphatic Epoxy | Uvacure 1500 | UCB Radcure | 30 - 50 | Sartomer SARCAT K126 |
| Polyester Polyol | Tone 0301 | Union Carbide | 20 - 30 | --------------- |
| Phosphoric Acid | Phos. Acid | J.T. Baker | 5 - 15 | commodity |
| Themoplastic | Expancel | Nobel Industries | 5 - 15 | H. M. Royal Microspheres |

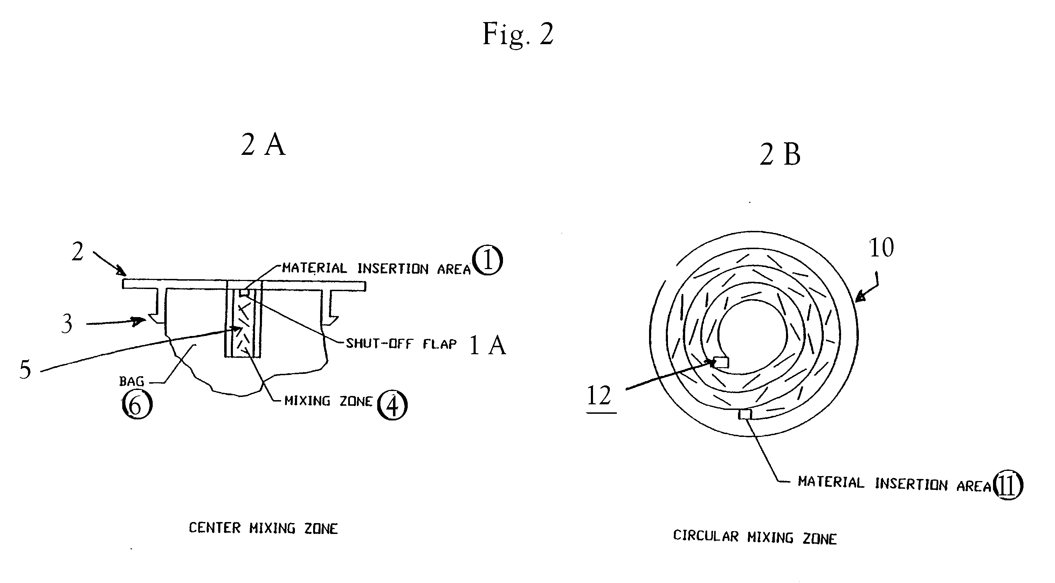

The precursors can be combined by using any suitable apparatus that imparts an amount of shear sufficient to obtain a substantially homogenous precursor. Examples of suitable apparatus comprise hand mixing, static tube mixtures, the structures described illustrated by Figures 2A and 2B (described below in greater detail), among other conventional apparatus. Normally, the samples are mixed for 2 to 10 seconds depending upon the composition and mixing environment, e.g., a 1:1 A:B composition can be mixed for about 5 seconds in a static tube mixer.

The inventive foam can be formed by contacting the precursors under conditions sufficient to cause the aforementioned exothermic reaction which causes the blowing agent to expand and in turn form a foam. Prior to being contacted, the precursors can be preblended and stored in separate containers. That is, a Part A or first precursor mixture is typically obtained by combining the epoxy and modifying material, e.g. polyvinyl alcohol and polypropylene, and a Part B or second precursor mixture can be obtained by combining the carrier, e.g., a polyol, hydrogen donor/acid and a blowing agent, e.g., a blowing agent encapsulated within a thermoplastic shell. Part A and Part B can be combined to obtain a foam by using conventional foam manufacturing equipment. For example, Part A and Part B can be contacted as two high pressure streams within a mixing chamber of an external mix-head. While heat can be added to the precursors, the reaction between "A" and "B" can occur under ambient conditions. The ratio of "A" to ''B" normally ranges from about 1:1 to about 5:1.

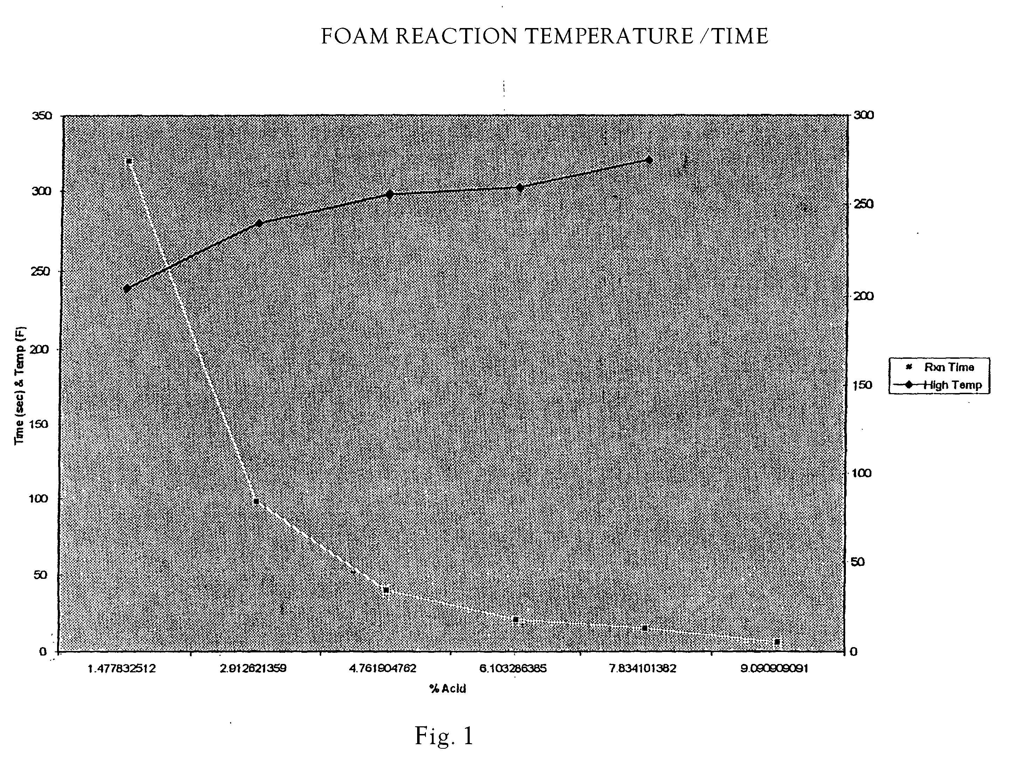

The pH of the A side (or epoxy) is normally 6 to at least 8. The pH of the B side of foam precursor comprising an acid and a carrier is normally 0.5 to 4, e.g., the pH of phosphoric acid when mixed with polyol. Normally, the pH prior to reaction with part A is about 1.6 The composition and concentration of the foam precursors can be modified to achieve a predetermined reaction rate e.g., by tailoring the concentration of the acid. The affects of the pH or acid concentration of the B side are better understood by reference to Figure 1 which illustrates the affects upon the composition demonstrated in Example 9. Referring now to Figure 1, Figure 1 is a graphical representation of % acid in the precursor versus foam reaction time and temperature. Figure 1 illustrates that as the acid concentration increases the reaction temperature increases and the reaction time decreases. Figure 1 also illustrates that the precursor can be selected to a predetermined reaction time/temperature. For example, by selecting a higher reaction temperature (higher acid concentration) a wider range of modifying materials can be employed whereas by selecting a slower reaction time (lower acid concentration) the foam has easier handling characteristics.

The viscosity of a foam precursor can be tailored to enhance the resultant foam characteristics. The viscosity of the "A" side or epoxy functional component of the foam precursor is normally controlled, for example, so that a modifying material, e.g., a plastic powder, becomes or remains dispersed within the "A" side precursor. While any suitable viscosity control agent can be employed desirable results can be achieved by using a solid polymer (in particulate form) to produce a foam precursor gel. Examples of suitable solid polymers comprise at least one member selected from the group consisting of EVOH, fluoropolymers and dispersions thereof such as polytetrafluoroethylene (supplied as Teflon® by the DuPont Company), among others. Certain modifying materials such as wax and polyethylene, and carriers such as PVOH can also function as viscosity control agents. That is, viscosity control agents become incorporated within the final foam and modify the properties of the foam. The viscosity control agent can range in particle size of 20 to 50 micrometres (microns) e.g., less than 325 mesh. An example of a controlled viscosity composition comprises 5 to 10 wt.% solid epoxy, 5 to 15 wt.%, powdered polyethylene and 25 to 30 wt.% blowing agent. In addition to viscosity, the characteristics of the foam can be tailored by varying the temperature, pressure, foam pH, foam density, among other parameters known to those skilled in this art. Also, the 'A' side of the system can be thickened into a gel by the addition of a surfactant such as any commercially available liquid detergent or titanate such as Kenrich KRTTS, e.g., 0.5 to 3 wt.% surfactant (refer to Example 9B). This enables a more complete rheological control, included insuring the homogeneity of the system.

In one aspect of the invention, the foam comprises a single phase system, e.g., only an "A" side mixture. An example of such a system comprises an epoxy functional compound, a polyol, thermoplastic spheres encapsulating a blowing agent, materials such as phenoxy, polypropylene, mixtures thereof, among other components. This system can be heat activated. In other words the system expands by being exposed to elevated temperature, e.g., about 125°C. If desired the single phase foam system can be initiated by employing a hydrogen donor comprising a photo-iniatitor instead of or in conjunction with an elevated temperature. Examples of such initiators comprise at least one member selected from the group consisting of Union Carbide UVI 6974 among others. Normally, the amount of such an initiator corresponds from 5 to 15 wt% of the foam precursor. More details regarding photoinitiators can be found in "Photopolymerization Behavior of Several Cationic Photoiniators in Catatonically Cured Resin Systems" by Edward Jurczak; that is hereby incorporated by reference. This single phase system is especially useful when applied upon a substrate by being sprayed. For example, the single phase system can be sprayed upon an automotive subassembly for reducing the amount of sound transmission to the interior of the car. In a further example, the single phase system can be sprayed upon a first component, e.g., a plastic facia, exposed to UV to cause foaming and affixed upon a second component, e.g, metal support member, wherein the foam functions to reduce vibrations between the components.

A composite foam structure can be obtained in accordance with the instant invention. A structural modifier such as fibers, particles, rods, tubes, powders, mixtures thereof, among others, can be incorporated as a component of the foam precursor. The structural modifier can be employed for tailoring the chemical and/or physical properties of the resultant foam. Examples of suitable structural modifiers, normally as chopped fibers or powders, can comprise at least one of nylon, carbon, carbonates, graphite, Kevlar®, Dyneon®, ceramic, fiberglass, metals, among other materials. Certain thermoplastic modifying materials such as polyethylene and polypropylene, and fillers such as mica and polytetrafluoroethylene can also function as structural modifiers. The amount of such structural modifiers normally comprises about 1 to about 30 wt.% of the uncured foam precursor.

Any suitable commercially available foam production equipment can be employed for mixing and dispensing the inventive foam precursors to obtain the inventive foam. An example of such equipment comprises ECONO-MIX supplied by Kirkco Corporation, Monroe, N.C. Another example comprises using a DO-PAG pump in combination with a Albeon static mix head. If desired, the inventive foam can be expanded with in a cavity, e.g., an automotive A pillar, by employing a dispensing apparatus having a replaceable/disposable static mix head. That is, the static mix head can comprise a replaceable plastic tubing having a center piece with a helix or vortex configuration, that is connected to a pump discharge flange and inserted into the cavity for foaming the precursors. Another static mix head design has a valve type of arrangement that is illustrated in Figures 2A and 2B. Referring now to Figure 2A, Figure 2A illustrates a one-way value type of arrangement wherein the foam or precursors thereof are introduced or injected via a one-way valve 1 (commonly known as a zerk) that is positioned within a cap 2. Valve 1 can also include a flap or secondary valve 1A that prevents foam from escaping by reverse flow through valve 1. The cap 2 seals or defines one end of a cavity being filled with foam. The cap 2 can include hooks or locking tabs 3 for securing the position of cap 2, e.g, within the so-called A pillar of an automobile thereby permitting foam to be dispensed within the automotive cavity in a controlled manner. Normally, one end of the valve 1 is connected to a mixing zone 4 such as the aforementioned static mixers having helical vanes 5. After traveling through the valve 1 and static mixer 4, the foam is released into the cavity to be filled with foam. The area and direction into which the foam expands can be control and/or defined by using a containment means such as a polymeric bag 6 (the containment means is described below in greater detail).

Referring now to Figure 2B, this type of arrangement provides a longer mixing time for the foam precursors before the foam is released into the cavity to be filled. The arrangement illustrated in Figure 2B can also be employed as a cap 10 to seal or define one end of the cavity to be sealed. After delivering the foam precursors, a mix head 11 or previously described valves (4 and 5 of Figure 2A). The foam precursors travel through mix head 11 and are released at the opening defined at 12 as a foam. The opening 12 can also be within the aforementioned containment means. The caps 1 and 10 can remain associated with the foam product within the cavity. By using such a replaceable mix head, any problems associated with clogged mix heads are avoided. Two pressure streams can also be employed, to converge in a mix chamber or cavity to be foamed and mix action occurs without use of additional mixing apparatus. In addition to the foregoing, the inventive foam composition can be injected, extruded, shaped, sprayed, molded, among other conventional processes in order to obtain a desirable foam article.

While the above description emphasizes particular foam compositions, the inventive compositions (and precursors thereof) can include additives such as dyes, surfactants, pigments, nucleating agents, among other conventional employed foam additives. If desired a pH indicator can be added to the precursor in order to provide a visual detection means for a reaction product. An example of a suitable pH indicator comprises at least one member selected from the group consisting of methyl red, methyl blue, chlorophenol red, bromothymol blue. That is, as the foam precursor react, e.g, acid-epoxy, the acid is consumed thereby changing the pH and causing the pH indicator to change color.

If desired, the inventive composition can be laminated or joined with other articles, e.g., laminated onto metal foil, mylar, fiberboard, etc.. The inventive composition can also be expanded within a control or containment means or bag having a predetermined shape thereby forming a foamed article that replicates the bag, e.g. refer to U.S. Patent Nos. 4,269,890 (Breitling), 4,232,788 (Roth), 4,390,333 (Dubois) to which further reference should be made. When expanding the foam into a bag, the previously described valves illustrated in Figures 2A and B, those supplied commercially by Inflatable Packaging as part no. IP04, or any other suitable delivery means can be employed at the opening in the bag in order to control introduction of the foam into the bag. For example, a bag replicating a cavity such as an automotive cavity or any other desirable configuration unrolls or expands into the cavity as foam is introduced into the bag via the valve. If desired, the bag may comprise or be coated with a heat sensitive adhesive wherein the heat generated by the exothermic foam reaction activates the adhesive. The adhesive can permanently affix the foam containing bag at any desirable location. The bag can also include predetermined areas having weakened seams or perforations that are designed to rupture as the foam expands thereby directing the expanding foam. Similarly, the bag composition can be selected such that the bag melts when exposed to the foam. The melting bag can direct the expanding foam, form a coating upon the foam, function as an adhesive, among other utilities. Further, a plurality of bags can be employed wherein one bag is surrounded by another bag. The inner and/or outer bag can possess the aforementioned predetermined properties. Furthermore, the bag can comprise areas having distinct chemical and/or physical properties, e.g., a bag comprising one sheet of polyethylene heat sealed around its peripherey to a sheet comprising polybutadiene. At least a portion of the bag can be fabricated from one or more members selected from the group consisting of polyethylene, polyester, vinyl, nylon, Surlyn®, ethylene vinyl acetate, styrene -isoprene- styrene, styrene- butadiene -styrene or other block copolymers, polybutadiene, among other plastic materials with melt points corresponding to temperature range of reaction, polyamide, modified EVA's, modified polyethylene, modified polybutadiene, GMA, SBR, among other plastic materials suitable for bag or bladder construction and seaming capability. In some cases, the aforementioned thermoplastic modifying materials can also be used to fabricate a containment means.

The following Examples are provided to illustrate not limit the scope of the invention as defined in the appended claims. Unless indicated otherwise, commercially available apparatus and materials were employed in these Examples.

### EXAMPLE 1

A foam product was produced by mixing a 2-part system (Part A and Part B) through a conventional foam production apparatus comprising a static mixer that was manufactured by Albion (Model No. 535-1 or equivalent). The constituents of the foam were maintained in two separate supplies of materials, Part A and Part B.

Part A comprised a blend of the epoxy and the thermoplastic microspheres (a blowing agent) in ratio of 30 parts to 15 (100 parts total). Part B comprised a blend of the phosphoric acid and the polyol in a 30 part to 50 part ratio (also 100 parts). The feed ratio of Part A to Part B to the mixer head was 1:1. The pH of the Part B was about 1.6 prior to reaction with Part A.

A pressurized flow through the mixing chamber produced a polymer which rapidly expands and released an amount of exothermic heat sufficient to produce a foam.

### EXAMPLE 2

The process of Example 1 was repeated with the exception that the ratio of epoxy to thermoplastic microspheres in Part A was 2:1, and the ratio of phosphoric acid to polyol in Part B was 3:5. The feed ratio of Part A to Part B to the mixer head was 3:1.

### EXAMPLE 3

The process of Example 1 was repeated with the exception that the Part A and Part B components were mixed together by hand (instead of using the static mixer).

### EXAMPLE 4

This example demonstrates the formation of a composite foam. The process of Example 1 was repeated with the exception that about 5 wt.% polytetrafluoroethylene powder (TEFLON® supplied by the DuPont Company) was added to the Part A composition. Part A and Part B were contacted in the manner described in Example 1. A composite foam was recovered wherein the composite foam had greater flexibility or pliability in comparison the foam obtained by the process of Example 1.

### EXAMPLE 5

A two phase system was used to produce a foam. Part A was composed of epoxy and microspheres in a 2:1 ratio (67 % epoxy, 33.3% microspheres) by weight.(for best results, the mix should be used within in 4-8 hours of mixing since epoxy can dissolve certain spheres ). Part A was hand stirred to a smooth consistency.

Part B was composed of Polyol (Tone 301) and Phosphoric acid (10%) by weight). The acid was blended into the polyol. Part A to Part B ratio of 1:1 was contacted in a static tube mixer (a commercially available tube having internal vanes that mix any material passing through the tube) and produced a foam. The ratio of A to B can be from 1:1 to 4:1 depending on acid concentration.

### EXAMPLE 6

A two phase system was used to produce a foam. Part A comprised an epoxy (Radcure 1500). Part B was comprised of a polyol (50 wt.% - tone 301), phosphoric acid diluted with water (approximately 50% acid in a commercially available solution) at 20%, and 30% microspheres The spheres were hand stirred into the polyol to a smooth consistency. The acid mixture was blended by hand stirred into the sphere-polyol mix. Part A to Part B ratio of 1:1 was contacted in a static tube mixer and produced a foam. The ratio of A to B can be from 1:1 to 4:1 depending on acid concentration.

### EXAMPLE 7

A two phase system was used to produce a foam. Part A comprised an epoxy (Radcure 1500) Part B comprised polyol (tone 301), polyvinyl alcohol and water blend (PVOH : H₂0 3:1 blend that corresponded to 20% of the polyol) and microspheres 30% by weight of polyol and acid can be 10% of total 'B' mixture. The spheres were hand stirred into the polyol to a smooth consistency. The PVOH and water are hand stirred. The PVOH/water solution temperature was 140 °F. The PVOH blend was added to the polyol by hand stirring. The acid was hand stirred into the sphere-PVOH- polyol mix. Part A to Part B ratio of 1:1 was contacted in a static tube mixer and produced a foam. The ratio of A to B can be from 1:1 to 4:1 depending upon acid concentration.

### EXAMPLE 8

A two phase system was used to produce a foam. Part A comprised an epoxy (Radcure 1500) and a phenoxy resin (Paphen 200 that corresponded to 25% of part A, epoxy is 75% of part A). Part B comprised 45 % polyol (tone 301), 23.5% polyvinyl alcohol (Air Products 203S) and 23.5% microspheres. Phosphoric acid was 10% of Part B. Spheres are hand stirred into the polyol to a smooth consistency. The PVOH, microspheres, and polyol are blended by hand stirring. The phosphoric acid was hand stirred into the sphere-PVOH- polyol mix. Part A to Part B ratio of 1:1 was used contacted in a static tube mixer to produce a foam. The A to B ratio can range from 1:1 to 4:1 depending on acid concentration.

### EXAMPLE 9A

A two phase system, namely a Part A and Part B, was used to produce a foam. Part A comprised an epoxy (Radcure 1500) 60 wt%, polypropylene powder (Equistar FP 800-00) 20 wt%, polyvinyl alcohol (Air Products 203S) 20 wt%. Part B comprised polyol (Tone 301) 60 wt% and microspheres 30%. Phosphoric acid was 10%. Spheres are hand stirred into the polyol until a smooth consistency was obtained. The microspheres and polyol are blended by hand stirring. The phosphoric acid was hand stirred into the microspheres and polyol mix. A Part A to Part B ratio of 1:1 was used and contacted in a static tube mixer to produce a foam. The A to B ratio can, however, range from 1:1 to 4:1 depending on acid concentration.

### EXAMPLE 9B

This Example employed a two phase system wherein the Part A comprised a gel. A two phase system, namely a Part A and Part B, was used to produce a foam. Part A comprised an epoxy (Radcure 1500) 59 wt%, polypropylene powder (Equistar FP 800-00) 20 wt%, polyvinyl alcohol (Air Products 203S) 20 wt% and surfactant (gelling agent) at 1 wt%. Part B comprised polyol (Tone 301) 60 wt% and microspheres 30%. Phosphoric acid was 10%. Spheres are hand stirred into the polyol until a smooth consistency was obtained. The microspheres and polyol are blended by hand stirring. The phosphoric acid was hand stirred into the microspheres and polyol mix. A Part A to Part B ratio of 1:1 was used and contacted in a static tube mixer to produce a foam. The A to B ratio can, however, range from 1:1 to 4:1 depending on acid concentration.

### EXAMPLE 10

A bag or containment means approximately 8x8 inches having a one-way valve located on one end of the bag was constructed from two sheets of high density polyethylene film. The seams of the bag were designed to rupture at specific locations, which directs foam expansion into cavity area adjacent to weak seams. The sheets were joined by heating on a TEW Electric Heating Company Ltd sealing apparatus. The seams were selectively reinforced by double sealing or weakend to provide multiple points for foam direction from the same bag. The foam composition demonstrated by Example 9 was introduced into this bag. As the foam expanded, the foam escaped from the bag through the relatively weak seams.

### EXAMPLE 11

A Bag or bladder composed of each of polyethylene, ethylene vinyl acetate, polybutadiene were fabricated by using the apparatus described in Example 10. The foam of Example 9 was introduced into these bags. The bags, having a melting point less than the exothermic reaction temperature of the foam, failed and released the foam.

### EXAMPLE 12

A bag or bladder composed of each of modified EVA (Bynel®), modified polyethylene (Primcor® supplied by Dow Chemical Company), modified butadiene, glycidal methacrylate (GMA) were fabricated by using the apparatus of Example 10. The foam of Example 9 was introduced into these bags. The heat released from the exothermic reaction of the foam caused the bags to melt. The melting bag material adhered to the foam thereby modifying the surface of the foam. The melting bag also adhered the foam to any surrounding surfaces or articles.

### EXAMPLE 13

A bag or bladder composed of each of polypropylene, polyethylene, woven nylon mesh, aluminized fiberglass mesh was fabricated by using the apparatus of Example 10. Each of the bags was further processed to possess multiple perforations [9.8- 39.2 holes/cm (25- 100 holes/in.)]. The foam of Example 9 was introduced into each of these bags. The perforations allowed the foam to escaped in controlled quantities while also generally retaining the shape of the bag.

### EXAMPLE 14

Two bags or bladders, namely an inner and outer bag were fabricated by using the apparatus of Example 10. The inner bag comprised modified butadiene and the outer bag comprised high density polyethylene. The inner bag was placed within the outer bag and the outer bag was sealed. The foam of Example 9 was introduced into the inner bag. Inner bag or bladder melted during the foam reaction. The inner bag was of sufficient size to contain the required amount of mixed foam precursors to fill the out bag. Outer bag construction was of material and size to contain reaction within the cavity.

### EXAMPLE 15

The insertion loss or sound dampening characteristics of the foam produced in accordance with Example 9A was tested in accordance with Society of Automotive Engineers (SAE) J 1400. The sample size was 7.6 x 7.6 x 25.4 cm (3x3x10 inches) and placed within an E-coated metal channel. An increase in insertion loss corresponds to an increase in sound dampening properties that in turn corresponds to less noise within the passenger compartment of an automobile.

| FREQ. (Hz) | INSERTION LOSS (dB) |
|---|---|
| 125 | 12.5 |
| 160 | 10.6 |
| 200 | 11.4 |
| 250 | 12.0 |
| 315 | 24.5 |
| 400 | 35.4 |
| 500 | 46.8 |
| 630 | 38.4 |
| 800 | 40.1 |
| 1000 | 45.7 |
| 1250 | 45.1 |
| 1600 | 49.6 |
| 2000 | 49.2 |
| 2500 | 50.1 |
| 3150 | 50.9 |
| 4000 | 55.5 |
| 5000 | 58.7 |
| 6300 | 59.2 |
| 8000 | 64.2 |

These data illustrate the desirable sound absorbing characteristics of the inventive foam compositions.

A skilled person in this art would understand that these Exemplary processes can be modified by manipulating process variables such as time and temperature of each aforementioned mixing step, mixing rate (RPM), time under vacuum. UV light exposure, and level of vacuum (mm Hg) as well as operating a continuous process. While the above Examples illustrate a batch process a skilled person in this art after having reviewed and understood the instant disclosure, would be capable of manipulating the aforementioned process variables to tailor the instant composition for a virtually unlimited array of product applications.

## Claims

1. A foam precursor comprising:
an A side comprising at least one epoxy functional compound and;
a B side comprising at least one carrier that is miscible with said at least one epoxy functional compound, and an amount of at least one hydrogen donor sufficient to cause an exothermic reaction between said epoxy and said hydrogen donor, wherein at least one of said A or B side comprises an encapsulated blowing agent and said exothermic reaction is sufficient to expand the blowing agent when said A and B side are contacted; and wherein the carrier comprises at least one polyol and/or water.

2. A foam precursor comprising:
at least one epoxy functional compound, at least one carrier that is miscible with said at least one epoxy functional compound; at least one blowing agent and an amount of at least one hydrogen donor sufficient to cause an exothermic reaction between said epoxy and said hydrogen donor; wherein said hydrogen donor comprises at least one photoinitiator; said exothermic reaction is sufficient to expand the blowing agent and said carrier comprises at least one polyol and/or water.

3. The foam precursor of claim 1, wherein said A side comprises a cycloaliphatic epoxy; at least one member selected from the group consisting of polypropylene, polyethylene and polyvinyl alcohol; and wherein said encapsulated blowing agent comprises encapsulated butane.

4. The foam precursor of claim 1, wherein said B side comprises polyester polyol and the hydrogen donor comprises at least one of phosphoric acid or a photo-initiator.

5. The foam precursor of claim 1, wherein said encapsulated blowing agent comprises a blowing agent encapsulated within a thermoplastic shell.

6. The foam precursor of claim 1, wherein said A side comprises an epoxy functional compound, polyvinyl alcohol, a thermoplastic plastic powder, and an encapsulated blowing agent.

7. The foam precursor of claim 1, wherein said B side comprises a polyol and the hydrogen donor comprises an acid source.

8. The foam precursor of claim 1 or 2, further comprising at least one member selected from the group consisting of nylon, carbon, polytetrafluoroethylene, carbonates and graphite.

9. The foam precursor of claim 1 wherein the hydrogen donor comprises an effective amount of at least one photoiniator.

10. The foam precursor of claim 1 or 2, further comprising a surfactant.

11. The foam precursor of claim 1, wherein said A side has a pH of 6 to 8.

12. The foam precursor of claim 1 or 2, wherein said epoxy functional compound comprises at least one member from the group consisting of bis-phenol A epoxy, epoxy modified elastomers, epoxy modified polybutene, epoxy modified polybutadiene, epoxy modified ethylene propylene rubber and cycloaliphatic epoxy.

13. The foam precursor of claim 1, wherein said hydrogen donor comprises an acid source comprising at least one member selected from the group consisting of sulfonic acids, phosphoric acid, citric acid, carboxylic acid, tannic acid and oxalic acid.

14. The foam precursor of claim 13 wherein said acid source comprises phosphoric acid.

15. The foam precursor of claim 5 wherein said thermoplastic shell comprises at least one member selected from the group consisting of acrylonitrile, polyethylene, nylon, EVA and polypropylene.

16. The foam precursor of any one of claims 1 or 2 wherein said blowing agent comprises at least one member selected from the group consisting of water, hydrazide, diphenyloxide-4,4,-disulphohydrazide, carbonamide, azocarbonamide, hexamethylene diamine carbarnate, sodium bicarbonate, carbon dioxide, difluoroethane, tetrafluoroethane, butane, and propane.

17. The foam precursor of claim 1, wherein the B side has a pH of 0.5 to 4.

18. The foam precursor of any one of claims 1 or 2 further comprising at least one member selected from the group consisting of polyacrylonitrile, ethylene vinyl acetate, polymer, polypropylene, polyethylene, rubber, phenoxy resin and powdered wax.

19. The foam precursor of claim 2 wherein said blowing agent comprises an encapsulated blowing agent.

20. The foam precursor of any one of claims 1 or 2 further comprising at least one member selected from the group consisting of fiberglass, mica, calcium carbonate, talc, magnesium silicate, metal, and ceramic.

21. The foam precursor of any one of claims 1 or 2 wherein said blowing agent comprises a hydrocarbon.

22. The foam precursor of any one of claims 1 or 2 wherein said carrier comprises at least one polyvinyl alcohol.

23. A foam obtained from the foam precursors of claim 1 or 2.

24. The foam of claim 23 wherein said foam further comprises at least one of fibers, particles, rods, tubes and powders.

25. A foam comprising the foam of claim 23 wherein said foam is at least partially in contact with at least one member selected from the group consisting of polyethylene, polyester, polyvinyl, ethylene vinyl acetate polymer, nylon, styrene -isoprene- styrene, styrene- butadiene -styrene or other blocked copolymers, polybutadiene, polyamide, modified EVA's, modified polyethylene, modified polybutadiene, GMA, SBR and mixtures thereof.

26. The foam of claim 25 wherein said at least one member comprises a containment means.

27. A method for producing a foam comprising:
(a) combining an A side comprising at least one epoxy functional compound with a B side comprising at least one carrier and at least one hydrogen donor while in the presence of an encapsulated blowing agent and under conditions sufficient to provide an exothermic reaction; and
(b) utilizing heat from the exothermic reaction so as to expand the combined components to form a foam;
wherein said carrier comprises at least one polyol and/or water.

28. A method for producing a foam comprising:
(a) providing a foam precursor comprising (i) at least one epoxy functional compound, (ii) at least one photoinitiator, (iii) at least one blowing agent, and (iv) a carrier comprising at least one polyol and/or water,
(b) exposing the foam precursor to a source of radiation sufficient to activate the photoinitiator and cause an exothermic reaction, and utilizing the heat from the exothermic reaction so as to cause the blowing agent to expand.

29. The method according to any one of claims 27 or 28 further comprising c) recovering of the foam.

30. The method according to claim 28 wherein the blowing agent comprises an encapsulated blowing agent.

31. The method according to any one of claims 27 or 28 wherein step (a) occurs at least in part within a containment device.

## Patentansprüche

1. Schaumstoff-Präkursor, umfassend:
eine A-Seite, die wenigstens eine Verbindung mit Epoxidfunktionalität , und
eine B-Seite, die wenigstens einen Träger, der mit der wenigstens einen Verbindung mit Epoxidfunktionalität mischbar ist, und eine Menge wenigstens eines Wasserstoffdonors umfaßt, die ausreicht, um eine exotherme Reaktion zwischen dem Epoxid und dem Wasserstoffdonor zu bewirken, wobei wenigstens eine der A- oder B-Seite ein eingekapseltes Treibmittel umfaßt und die exotherme Reaktion ausreicht, um das Treibmittel zu expandieren, wenn die A- und die B-Seite in Kontakt gebracht werden, und wobei der Träger wenigstens ein Polyol und/oder Wasser umfaßt.

2. Schaumstoff-Präkursor, umfassend:
wenigstens eine Verbindung mit Epoxidfunktionalität, wenigstens einen Träger, der mit der wenigstens einen Verbindung mit Epoxidfunktionalität mischbar ist, wenigstens ein Treibmittel und eine Menge wenigstens eines Wasserstoffdonors, die ausreicht, um eine exotherme Reaktion zwischen dem Epoxid und dem Wasserstoffdonor zu bewirken, wobei der Wasserstoffdonor wenigstens einen Photoinitiator umfaßt, die exotherme Reaktion ausreicht, um das Treibmittel zu expandieren, und der Träger wenigstens ein Polyol und/oder Wasser umfaßt.

3. Schaumstoff-Präkursor nach Anspruch 1, wobei die A-Seite ein cycloaliphatisches Epoxid, wenigstens eine Komponente, ausgewählt aus der Gruppe, bestehend aus Polypropylen, Polyethylen und Polyvinylalkohol, umfaßt und wobei das eingekapselte Treibmittel eingekapseltes Butan umfaßt.

4. Schaumstoff-Präkursor nach Anspruch 1, wobei die B-Seite Polyesterpolyol umfaßt und der Wasserstoffdonor wenigstens entweder Phosphorsäure oder einen Photoinitiator umfaßt.

5. Schaumstoff-Präkursor nach Anspruch 1, wobei das eingekapselte Treibmittel ein Treibmittel umfaßt, das in eine thermoplastische Hülle eingekapselt ist.

6. Schaumstoff-Präkursor nach Anspruch 1, wobei die A-Seite eine Verbindung mit Epoxidfunktionalität, Polyvinylalkohol, ein thermoplastisches Kunststoffpulver und ein eingekapseltes Treibmittel umfaßt.

7. Schaumstoff-Präkursor nach Anspruch 1, wobei die B-Seite ein Polyol umfaßt und der Wasserstoffdonor eine Säurequelle umfaßt.

8. Schaumstoff-Präkursor nach Anspruch 1 oder 2, der außerdem wenigstens eine Komponente, ausgewählt aus der Gruppe, bestehend aus Nylon, Kohlenstoff, Polytetrafluorethylen, Carbonaten und Graphit, umfaßt.

9. Schaumstoff-Präkursor nach Anspruch 1, wobei der Wasserstoffdonor eine wirksame Menge wenigstens eines Photoinitiators umfaßt.

10. Schaumstoff-Präkursor nach Anspruch 1 oder 2, der außerdem einen grenzflächenaktiven Stoff umfaßt.

11. Schaumstoff-Präkursor nach Anspruch 1, wobei die A-Seite einen pH-Wert von 6 bis 8 aufweist.

12. Schaumstoff-Präkursor nach Anspruch 1 oder 2, wobei die Verbindung mit Epoxidfunktionalität wenigstens eine Komponente aus der Gruppe, bestehend aus Bisphenol-A-Epoxidharz, epoxid modifizierten Elastomeren, epoxidmodifiziertem Polybuten, epoxidmodifiziertem Polybutadien, epoxidmodifiziertem Ethylen-Propylen-Kautschuk und cycloaliphatischem Epoxidharz, umfaßt.

13. Schaumstoff-Präkursor nach Anspruch 1, wobei der Wasserstoffdonor eine Säurequelle umfaßt, die wenigstens eine Komponente, ausgewählt aus der Gruppe, bestehend aus Sulfonsäure, Phosphorsäure, Citronensäure, Carbonsäure, Tannin und Oxalsäure, umfaßt.

14. Schaumstoff-Präkursor nach Anspruch 13, wobei die Säurequelle Phosphorsäure umfaßt.

15. Schaumstoff-Präkursor nach Anspruch 5, wobei die thermoplastische Hülle wenigstens eine Komponente, ausgewählt aus der Gruppe, bestehend aus Acrylnitril, Polyethylen, Nylon, EVA und Polypropylen, umfaßt.

16. Schaumstoff-Präkursor nach irgendeinem der Ansprüche 1 oder 2, wobei das Treibmittel wenigstens eine Komponente, ausgewählt aus der Gruppe, bestehend aus Wasser, Hydrazid, Diphenyloxid-4,4-disulfohydrazid, Carbonamid, Azocarbonamid, Hexamethylen-diamin-carbamat, Natriumbicarbonat, Kohlendioxid, Difluorethan, Tetrafluorethan, Butan und Propan, umfaßt.

17. Schaumstoff-Präkursor nach Anspruch 1, wobei die B-Seite einen pH-Wert von 0,5 bis 4 aufweist.

18. Schaumstoff-Präkursor nach irgendeinem der Ansprüche 1 oder 2, der außerdem wenigstens eine Komponente, ausgewählt aus der Gruppe, bestehend aus Polyacrylnitril, Ethylen-Vinylacetat-Polymer, Polypropylen, Polyethylen, Kautschuk, Phenoxyharz und pulverisiertem Wachs, umfaßt.

19. Schaumstoff-Präkursor nach Anspruch 2, wobei das Treibmittel ein eingekapseltes Treibmittel umfaßt.

20. Schaumstoff-Präkursor nach irgendeinem der Ansprüche 1 oder 2, der außerdem wenigstens eine Komponente, ausgewählt aus der Gruppe, bestehend aus Glasfaserstoff, Glimmer, Calciumcarbonat, Talkum, Magnesiumsilicat, Metall und Keramik, umfaßt.

21. Schaumstoff-Präkursor nach irgendeinem der Ansprüche 1 oder 2, wobei das Treibmittel einen Kohlenwasserstoff umfaßt.

22. Schaumstoff-Präkursor nach irgendeinem der Ansprüche 1 oder 2, wobei der Träger wenigstens einen Polyvinylalkohol umfaßt.

23. Schaumstoff, gewonnen aus den Schaumstoff-Präkursoren nach Anspruch 1 oder 2.

24. Schaumstoff nach Anspruch 23, wobei dieser Schaumstoff außerdem wenigstens eine der folgenden Komponenten umfaßt: Fasern, Teilchen, Stäbe, Röhren und Pulver.

25. Schaumstoff, der den Schaumstoff nach Anspruch 23 umfaßt, wobei dieser Schaumstoff wenigstens teilweise mit wenigstens einer Komponente, ausgewählt aus der Gruppe, bestehend aus Polyethylen, Polyester, Polyvinyl, Ethylen-Vinylacetat-Polymer, Nylon, Styrol-Isopren-Styrol, Styrol-Butadien-Styrol oder anderen Blockcopolymeren, Polybutadien, Polyamid, modifizierten EVAs, modifiziertem Polyethylen, modifiziertem Polybutadien, GMA, SBK und Mischungen davon, in Kontakt ist.

26. Schaumstoff nach Anspruch 25, wobei wenigstens eine Komponente ein Mittel zur räumlichen Eingrenzung umfaßt.

27. Verfahren zur Erzeugung eines Schaumstoffs, umfassend:
(a) die Vereinigung einer A-Seite, die wenigstens eine Verbindung mit Epoxidfunktionalität umfaßt, mit einer B-Seite, die wenigstens einen Träger und wenigstens einen Wasserstoffdonor umfaßt, in Gegenwart eines eingekapselten Treibmittels und unter Bedingungen, die ausreichen, um eine exotherme Reaktion zu erzeugen; und
(b) das Nutzen der Wärme aus der exothermen Reaktion, um die vereinigten Bestandteile zu expandieren, um einen Schaumstoff zu bilden;
wobei der Träger wenigstens ein Polyol und/oder Wasser umfaßt.

28. Verfahren zur Erzeugung eines Schaumstoffs, umfassend:
(a) das Bereitstellen eines Schaumstoff-Präkursors, der (i) wenigstens eine Verbindung mit Epoxidfunktionalität, (ii) wenigstens einen Photoinitiator, (iii) wenigstens ein Treibmittel und (iv) einen Träger umfaßt, welcher wenigstens ein Polyol und/oder Wasser umfaßt,
(b) das Aussetzen des Schaumstoff-Präkursors einer Strahlungsquelle, die ausreicht, um den Photoinitiator zu aktivieren und eine exotherme Reaktion zu bewirken, und das Nutzen der Wärme aus der exothermen Reaktion, um die Expansion des Treibmittels zu bewirken.

29. Verfahren nach irgendeinem der Ansprüche 27 oder 28, das außerdem c) das Gewinnen des Schaumstoffs umfaßt.

30. Verfahren nach Anspruch 28, wobei das Treibmittel ein eingekapseltes Treibmittel umfaßt.

31. Verfahren nach irgendeinem der Ansprüche 27 oder 28, wobei Schritt (a) wenigstens zum Teil innerhalb einer Vorrichtung zur räumlichen Eingrenzung erfolgt.

## Revendications

1. Un précurseur de mousse comprenant :
un composant A comprenant au moins un composé à fonction époxy ; et
un composant B comprenant au moins un véhicule qui est miscible audit au moins un composé à fonction époxy, et au moins un donneur d'hydrogène en une quantité suffisante pour provoquer une réaction exothermique entre ledit époxyde et ledit donneur d'hydrogène, dans lequel l'un au moins desdits composants A et B comprend un agent gonflant encapsulé et ladite réaction exothermique est suffisante pour dilater l'agent gonflant lorsque lesdits composants A et B sont mis en contact ; et dans lequel le véhicule comprend au moins un polyol et/ou de l'eau.

2. Un précurseur de mousse comprenant :
au moins un composé à fonction époxy, au moins un véhicule qui est miscible audit au moins un composé à fonction époxy ; au moins un agent gonflant, et au moins un donneur d'hydrogène en une quantité suffisante pour provoquer une réaction exothermique entre ledit époxyde et ledit donneur d'hydrogène ; dans lequel ledit donneur d'hydrogène comprend au moins un photo-initiateur ; ladite réaction exothermique est suffisante pour dilater l'agent gonflant et ledit véhicule comprend au moins un polyol et/ou de l'eau.

3. Le précurseur de mousse de la revendication 1, dans lequel ledit composant A comprend un époxyde cycloaliphatique ; au moins un membre de la classe formée par le polypropylène, le polyéthylène et l'alcool polyvinylique ; et dans lequel ledit agent gonflant encapsulé comprend du butane encapsulé.

4. Le précurseur de mousse de la revendication 1, dans lequel ledit composant B comprend un polyester-polyol et le donneur d'hydrogène comprend l'un au moins de l'acide phosphorique ou d'un photo-initiateur.

5. Le précurseur de mousse de la revendication 1, dans lequel ledit agent gonflant encapsulé comprend un agent gonflant encapsulé dans une capsule thermoplastique.

6. Le précurseur de mousse de la revendication 1, dans lequel ledit composant A comprend un composé à fonction époxy, de l'alcool polyvinylique, une poudre de matière thermoplastique et un agent gonflant encapsulé.

7. Le précurseur de mousse de la revendication 1, dans lequel ledit composant B comprend un polyol et le donneur d'hydrogène comprend une source d'acide.

8. Le précurseur de mousse de la revendication 1 ou 2, comprenant de plus au moins un membre de la classe formée par le nylon, le carbone, le polytétrafluoréthylène, les carbonates et le graphite.

9. Le précurseur de mousse de la revendication 1, dans lequel le donneur d'hydrogène comprend une quantité efficace d'au moins un photo-initiateur.

10. Le précurseur de mousse de la revendication 1 ou 2, comprenant de plus un agent tensio-actif.

11. Le précurseur de mousse de la revendication 1, dans lequel le pH dudit composant A est de 6 à 8.

12. Le précurseur de mousse de la revendication 1 ou 2, dans lequel ledit composé à fonction époxy comprend au moins un membre de la classe formée par un époxyde de bisphénol A, des élastomères modifiés par des groupes époxy, un polybutène modifié par des groupes époxy, un polybutadiène modifié par des groupes époxy, un caoutchouc éthylène-propylène modifié par des groupes époxy et un époxyde cycloaliphatique.

13. Le précurseur de mousse de la revendication 1, dans lequel ledit donneur d'hydrogène comprend une source d'acide comprenant au moins un membre de la classe formée par les acides sulfoniques, l'acide phosphorique, l'acide citrique, un acide carboxylique, l'acide tannique et l'acide oxalique.

14. Le précurseur de mousse de la revendication 13, dans lequel ladite source d'acide comprend de l'acide phosphorique.

15. Le précurseur de mousse de la revendication 5, dans lequel ladite capsule thermoplastique comprend au moins un membre de la classe formée par l'acrylonitrile, le polyéthylène, le nylon, l'EVA et le polypropylène.

16. Le précurseur de mousse de l'une quelconque des revendications 1 ou 2, dans lequel ledit agent gonflant comprend au moins un membre de la classe formée par l'eau, un hydrazide, l'éther de diphényle-4,4-disulfohydrazide, un carbonamide, l'azocarbonamide, le carbamate d'hexaméthylènediamine, le bicarbonate de sodium, l'anhydride carbonique, le difluoroéthane, le tétrafluoroéthane, le butane et le propane.

17. Le précurseur de mousse de la revendication 1, dans lequel le pH du composant B est de 0,5 à 4.

18. Le précurseur de mousse de l'une quelconque des revendications 1 ou 2, comprenant de plus au moins un membre de la classe formée par le polyacrylonitrile, un polymère éthylène-acétate de vinyle, le polypropylène, le polyéthylène, un caoutchouc, une résine phénoxy et une cire en poudre.

19. Le précurseur de mousse de la revendication 2, dans lequel ledit agent gonflant comprend un agent gonflant encapsulé.

20. Le précurseur de mousse de l'une quelconque des revendications 1 ou 2, comprenant de plus au moins un membre de la classe formée par la fibre de verre, le mica, le carbonate de calcium, le talc, le silicate de magnésium, un métal et une céramique.

21. Le précurseur de mousse de l'une quelconque des revendications 1 ou 2, dans lequel ledit agent gonflant comprend un hydrocarbure.

22. Le précurseur de mousse de l'une quelconque des revendications 1 ou 2, dans lequel ledit véhicule comprend au moins un alcool polyvinylique.

23. Une mousse obtenue à partir des précurseurs de mousse de la revendication 1 ou 2.

24. La mousse de la revendication 23, dans laquelle ladite mousse comprend de plus au moins un constituant choisi parmi des fibres, particules, bâtonnets, tubes et poudres.

25. Une mousse comprenant la mousse de la revendication 23, dans laquelle ladite mousse est au moins partiellement en contact avec au moins un membre de la classe formée par le polyéthylène, un polyester, un polyvinyle, un polymère éthylène-acétate de vinyle, un nylon, un styrène-isoprène-styrène, un styrène-butadiène-styrène ou d'autres copolymères séquencés, le polybutadiène, un polyamide, les EVA modifiés, un polyéthylène modifié, un polybutadiène modifié, GMA, SBR et leurs mélanges.

26. La mousse de la revendication 25, dans laquelle ledit au moins un membre comprend un moyen de confinement.

27. Un procédé pour la production d'une mousse, comprenant les étapes consistant à :
(a) combiner un composant A comprenant au moins un composé à fonction époxy avec un composant B comprenant au moins un véhicule et au moins un donneur d'hydrogène, en présence d'un agent gonflant encapsulé et dans des conditions suffisantes pour provoquer une réaction exothermique ; et
(b) utiliser la chaleur de la réaction exothermique afin d'expanser les composants combinés pour former une mousse ;
dans lequel ledit véhicule comprend au moins un polyol et/ou de l'eau.

28. Un procédé pour la production d'une mousse, comprenant les étapes consistant à :
(a) fournir un précurseur de mousse comprenant (i) au moins un composé à fonction époxy, (ii) au moins un photo-initiateur, (iii) au moins un agent gonflant et (iv) un véhicule comprenant au moins un polyol et/ou de l'eau,
(b) exposer le précurseur de mousse à une source de rayonnement suffisante pour activer le photo-initiateur et provoquer une réaction exothermique, et utiliser la chaleur de la réaction exothermique afin de provoquer la dilatation de l'agent gonflant.

29. Le procédé selon l'une quelconque des revendications 27 ou 28, comprenant de plus l'étape consistant à (c) récupérer la mousse.

30. Le procédé selon la revendication 28, dans lequel l'agent gonflant comprend un agent gonflant encapsulé.

31. Le procédé selon l'une quelconque des revendications 27 ou 28, dans lequel l'étape (a) a lieu au moins en partie dans un dispositif de confinement.
